# EUROPEAN PATENT APPLICATION

(11) **EP 3 125 173 A1**
(43) Date of publication of application: **01.02.2017**
(21) Application number: 16179167.8
(22) Date of filing: 13.07.2016
(51) Int. Cl.: G06Q 10/06, G06Q 30/06, G06K 9/00, A41H 1/00

(54) **METHOD OF AND SYSTEM FOR PROVIDING A LOW DRAG GARMENT**

(30) Priority: 28.07.2015 GB 201513301
(71) Applicant: Endura Limited, Livingston Lothian EH54 8SF (GB)
(72) Inventor: SMART, Simon, Milton Keynes, NN13 7RP (GB); McFARLANE, Jim, Livngston, West Lothian EH54 8SF (GB)
(74) Representative: Raynor, Simon Mark

(57) **Abstract**

A method of providing a garment with low aerodynamic drag for an individual person comprises providing a database containing data relating to the aerodynamic performance of a plurality of garments when worn by a plurality of persons having different adopted body shapes, determining the adopted body shape of the individual person, and entering data relating to the adopted body shape of the individual person into a computer. The database is interrogated by means of the computer to identify a set of aerodynamic performance data relating to garments worn by a person having a similar adopted body shape to the individual person. The computer compares the aerodynamic performance data of the garments in the identified data set, selects from the identified data set a garment having a relatively low aerodynamic drag, looks up in the database the characteristics of the selected garment, and uses at least some of the characteristics of the selected garment to provide a garment for the individual person.

## Description

The present invention relates to a method and a system for providing a garment with low aerodynamic drag. In particular, but not exclusively, the invention relates to a method and a system for providing a garment comprising an article of sports clothing for use in sports such as cycling, running, skiing and speed skating, where aerodynamic drag can have a significant effect on the performance of the athlete.

Cycling is an increasingly popular sport and for those participants who are involved in competitive cycling there is a great interest in finding technical advancements which can improve performance. For road cycling in particular, the biggest single factor that determines speed for a given effort (power input) from a cyclist on any relatively flat road is aerodynamics and whilst various improvements have been made to reduce drag by improving the aerodynamic performance of bikes, wheels and helmets, the biggest single source of aerodynamic drag on a cyclist is on the body itself. The clothed surface of a cyclist typically accounts for the majority of the drag force that impedes speed.

When airflow passes over a body there are two fundamental mechanisms that produce a drag force. These forces come from surface drag, caused by friction as the air passes over the surface, and pressure drag caused primarily by the separation of vortices from the boundary layer. The ratio of surface drag to pressure drag is highly dependent on the shape of the object. Where objects are specifically shaped for optimum aerodynamic efficiency, the aspect ratio (length: width) will generally be at least 3:1. With an increased length to width ratio it is possible to have a wing-like shape with a narrow trailing edge. The advantage of this is that the flow can remain attached to the surface of the object so that the streamlines follow the shape of the profile. Although the surface area of the object and the resulting surface friction are increased, the flow is able to *"recover"* beyond the widest point of the object, resulting in a small net pressure drag. Generally, the reduction in pressure drag far outweighs the increase in surface drag.

The human body, however, is not designed for aerodynamic efficiency and when in an upright position as adopted in most sports tends to have an aspect ratio of less than 1:1. Pressure drag thus tends to be far more significant than friction drag.

As a result of extensive research using wind tunnels it has been possible to design clothing that reduces both frictional surface drag on the clothed areas of any given cyclist and also to reduce the more significant pressure drag that occurs due to airflow separation caused as the airflow passes around the moving cyclist and separates from the cyclist's body leaving a partial vacuum to their rear. This is described for example in British patent application No. 1506621.0 (publication No. GB_).

Pressure drag can be reduced in some cases by the use of garments that are designed to reduce separation of the boundary layer from the body as air flows around the body. This can be achieved for example by modifying the surface texture of the garment or by positioning the seams of the garment to provide trip edges. However, these areas of surface texture and/or trip edges must be positioned correctly to be effective.

When designing bicycles (i.e. bicycles frames, bicycle wheels and bicycle components) to minimise drag and improve aerodynamic efficiency, the shape and positioning of the item being designed is determined by the designer and is fixed thereafter. As a result, relatively accurate predictions of performance of such items can be made in real world use after development and testing in wind tunnels. With clothing however this is far more problematic since the final shape and orientation of the clothing surface is unknown as it is determined by both the body shape and riding position of the wearer, which at the time of design are unknown unless the clothing is being custom designed and produced for a known individual.

Clothing can be designed to be aerodynamically optimised for riders of (a) a particular body shape in (b) a given riding position, the combination of which results in (c) an "adopted body shape" (or "riding shape") for a defined speed. It is the combination of "riding shape" and speed that informs the particular layout of clothing seams, fabric surface textures and other clothing design aspects in order to minimise the combined effects of surface frictional drag and pressure drag in order to improve aerodynamic performance.

Until now, this process of optimising clothing for the rider would require testing of an individual cyclist in their chosen riding position (i.e. a known "riding shape") at the speed for which it is desired to optimise the clothing's aerodynamic performance. Various wind tunnel tests would be performed using different clothing options and these clothing options would have different seam constructions and/or fabrics to find the best outcome for that specific rider, in their chosen riding position at the given speed. Given the rarity of wind tunnels - and particularly those that are adapted for cycling - and the costs of such wind tunnels and staff that are qualified to perform such tests this is an unworkably expensive process even for the vast majority of world class professional cyclists.

Furthermore, a wind tunnel test will generally provide only a single measurement for the overall aerodynamic drag of the cyclist and the bike in combination. It is virtually impossible to measure the drag caused by the individual components of the cyclist's garments, such as the sleeves, legs and torso. Therefore, optimising a garment for a particular cyclist will be largely a matter of trial and error, and is likely to be extremely time-consuming if many clothing variants are tested. It is therefore very difficult in practice to achieve an optimum low drag performance.

It is an object of the present invention to provide a method and a system for providing a garment with low aerodynamic drag, which mitigates one or more of the aforesaid problems.

According to one aspect, the present invention relates to a method of providing a garment with low aerodynamic drag for an individual person, the method comprising (a) providing a database containing data relating to (i) a plurality of different adopted body shapes and (ii) one or more garments that provide a low aerodynamic drag with each of the plurality of adopted body shapes, (b) determining an adopted body shape of the individual person, (c) entering data relating to the adopted body shape of the individual person into a computer, (d) interrogating the database by means of the computer and identifying from the plurality of adopted body shapes at least one adopted body shape that is similar to the adopted body shape of the individual person, (e) selecting from the database at least one garment having low aerodynamic drag with the identified adopted body shape, (f) looking up in the database one or more characteristics of the selected garment, and (g) providing a garment for the individual person that matches one or more characteristics of the selected garment. The term "garment" as used herein in the description and in the claims refers to any item of clothing for covering any part of a human body, and includes both complete garments (for example shirts, trousers, bodysuits etc.) and individual components ("garment components") of complete garments (for example the sleeves, legs, or body of a garment).

The term "adopted body shape" as used herein in the description and in the claims refers to the adopted shape either of the whole body or any part thereof (for example, the legs, arms or torso, or parts thereof such as the upper arm, lower arm and so on), when the individual person has adopted a preferred posture for participating in a selected activity (e.g. cycling, running, speed skating etc.).

The method makes it possible to provide a garment with low aerodynamic drag for an individual person, which is tailored to the adopted body shape of that person, without requiring the person to take part in wind tunnel testing. It is only necessary to determine the adopted body shape of the individual person, which can be done using any suitable shape sensor, for example a 3D laser scanner. This is a relatively quick and simple process. The database is then interrogated to retrieve the characteristics of a garment that has low aerodynamic drag for a person of that or a similar adopted body shape. A garment having those characteristics can then be provided, either from a supply of ready-made garments, of by manufacturing a suitable garment to order.

The data contained in the database relating to the aerodynamic performance of a plurality of garments may include data relating to one or more characteristics of the garment selected from a range comprising the type of garment, the design, size and/or relative dimensions of the garment, the position of one or more seams in the garment, the type, texture and/or permeability of the fabric forming the garment, or any three dimensional pattern applied to the surface of the fabric.

The database may contain data relating to the aerodynamic performance of a plurality of garments at a range of different airspeeds. Selecting a garment having a relatively low aerodynamic drag may include selecting an airspeed from the range of different airspeeds. Through these steps the garment can be tailored to a particular kind of event or a particular athlete, so that it is matched to the anticipated speed of an athlete during a specific event. In the case of activities such as cycling or running, the database may contain data relating to the aerodynamic performance of a plurality of garments at a range of different performance cadences. Selecting a garment having a relatively low aerodynamic drag may include selecting a performance cadence from the range of different performance cadences. These steps allow the garment to be tailored to the characteristics of a particular athlete, such as the athlete's pedalling or running cadence.

The database may contain data relating to a plurality of garment components, and the method may include selecting a plurality of garment components, each having a low aerodynamic drag with an identified adopted body shape, and providing a garment for the individual person by combining garment components that match one or more characteristics of the selected garment components.

The database may contain data relating to the aerodynamic performance of a plurality of separate components of the garments. Determining the adopted body shape of the individual person may include determining the shape of a plurality of separate body parts of the individual person. Interrogating the database may include identifying a set of aerodynamic performance data relating to garment components worn by a person having body parts of similar shape to the body parts of the individual person. These steps allow individual components of the garment to be designed for minimum drag, which is virtually impossible to achieve by wind tunnel testing using conventional techniques.

Providing a garment for the individual person may include selecting from the identified data set a collection of garment components, each garment component having a relatively low aerodynamic drag, looking up in the database the characteristics of the selected garment components, and combining at least some of the selected garment components to provide a garment for the individual person. The selected garment components may for example be combined by sewing, bonding or joining them together by some other method to provide the low drag garment.

Determining the adopted body shape of the individual person may include obtaining the three dimensional adopted body shape of the individual person, for example by using a laser scanner, optical scanner or other such device that can capture 3D shapes.

The adopted body shape of the individual person is determined while the individual person is in a posture that is adopted while engaging in a specific sporting activity. Additionally, the body shape of the individual person may be determined while the individual person is in an alternative posture, for example standing upright.

The method may include creating a database that contains data relating to a plurality of different adopted body shapes and one or more garments that provide low aerodynamic drag with each of the plurality of adopted body shapes.

Creating the database may include performing a series of wind tunnel tests to determine the aerodynamic performance of a plurality of garments when worn by a plurality of persons having different adopted body shapes, and storing data relating to the aerodynamic performance of the garments in a database.

Performing a series of wind tunnel tests may include changing individual garment components to determine the effect of those garment components on the aerodynamic performance of garment comprising a plurality of garment components.

Creating the database may include determining the aerodynamic performance of a plurality of garments by computational fluid dynamics.

Another aspect of the invention relates to a system for providing a garment with low aerodynamic drag for an individual person, the system comprising a database containing data relating to a plurality of different adopted body shapes and one or more garments that provide a low aerodynamic drag with each of the plurality of adopted body shapes, a shape sensing device for determining the adopted body shape of the individual person, and a computer having data input means for entering data relating to the adopted body shape of the individual person into the computer, the computer being configured to (i) interrogate the database and identify from the plurality of adopted body shapes at least one adopted body shape that is similar to the adopted body shape of the individual person, (ii) select from the database at least one garment having a low aerodynamic drag with the identified adopted body shape, (iv) look up in the database one or more characteristics of the selected garment, and (v) provide a garment for the individual person by matching one or more characteristics of the selected garment.

The system may include a shape capturing device that is configured to obtain the three dimensional shape of the individual person so as to determine the adopted body shape of the individual person.

The system may include a wind tunnel and sensing apparatus configured for performing a series of wind tunnel tests to determine the aerodynamic performance of a plurality of garments with each of a plurality of adopted body shapes.

The proposed system enables an individual to have prescribed the most aerodynamically advantageous clothing option from a range of aerodynamically pre-tested clothing - or clothing components - based on their riding shape and specified speed (or speed range) without requiring the individual to be tested in a wind tunnel or by use of other equipment that would be required to directly measure their aerodynamic performance.

The system is based on building a database of drag resistance information by testing a large number of different riders of varying adopted body shapes at different speeds and wearing different clothing options, in a wind tunnel. This allows for the creation of a database containing information in relation to adopted body shape, clothing options and speed. Adopted body shapes are captured by a suitable method of recording 3D shapes such as, but not restricted to, the use of 3D scanners using laser or infrared technology.

In a preferred embodiment of the invention the database subjects are first 3D scanned both in their upright standing position and adopted riding position when cycling using, for example, an infrared or laser 3D scanner in order to accurately record their natural body shape and their adopted body shape when in a riding position. Other methods of capturing 3D body shapes may be available now or in the future.

For each of these tests the database test subjects are tested many times in a wind tunnel wearing various different aerodynamically developed clothing options that have different construction and fabric options and different surface textures to record the resultant aerodynamic performance / drag for that combination. This process involves separate testing of various options of cycle jerseys, bibshorts, skinsuits and other apparel with each change made in isolation so that the effect of changing each aspect is clearly and separately recorded when building the database.

Potential clients searching for the best match aerodynamically optimised clothing to suit their adopted body shape and riding speed have their adopted body shape captured using a 3D scanner or other method in their adopted riding position and preferably also in an upright standing position. Their 3D adopted body shape information is inputted into a computer algorithm that matches them in the database to the closest adopted body shape profile. The known best wind tunnel tested clothing (lowest drag/lowest aerodynamic drag coefficient) outcomes for the adopted body shape at the specified speed range are then selected as the most beneficial clothing options for that client in order to reduce aerodynamic drag.

In an alternative embodiment of the invention, the adopted body shape information of an individual in the preferred riding position is segmented using an algorithm in order to separate the major body component parts that significantly affect aerodynamic resistance such as torso, upper arms, forearms, thighs, calves and feet.

The individual's body component shapes and orientations (i.e. their "adopted body component shapes") are then compared against known drag data that has been measured in the wind tunnel when testing models of body shape components of varying shape in different orientations (i.e. models that approximate to different "adopted body component shapes"). Each of these "adopted body component shape" models has been tested at a range of different speeds, and for each wind speed has been clothed in range of options that have different aerodynamic characteristics such as fabric texture, air permeability and seam type/position resulting in differing outcomes of aerodynamic performance (or drag).

Each of the individual's segmented "adopted body component shapes" is algorithmically compared with those found within the wind tunnel test database and paired with the closest matching "adopted body component shape" model. The fabric and clothing construction option that was shown to result in the lowest drag for the paired "adopted body component shape" model at the desired wind speed is selected for the individual. The process is then repeated for each body component in order to identify the best clothing option for each element of the complete garment.

In a further embodiment of the system, the cadence (rate of pedalling measured in strokes per minute) of the client is also recorded as an input in order for the profile matching algorithm to be included as a variable when matching against the database for each of the riding shapes and speeds. This is significant as turbulence is affected by cadence and this in turn influences the aerodynamic performance of the rider, particularly in the lower body. The inclusion of cadence data consequently requires each wind tunnel test to be repeated at different cycling cadences when building the database in order to isolate the cadence effect on aerodynamics as a separate variable.

In a further embodiment of the system, prior to prescribing the most aerodynamically advantageous clothing option for the individual, the algorithm compares the individual's current riding shape against other riding shapes within the database created by test subjects of similar adopted body shape to the individual (this is established by comparing the individual's and database 3D shapes when in an upright standing position). This makes possible the highlighting of potential aerodynamic gains at the specified speed that may be achieved by adjustments to the individual's currently adopted riding position. These gains have been demonstrated by the database test riders who have similar adopted body shape to the individual being fitted but have been tested in various different riding positions from the individual, one or more of which have been shown to be more aerodynamically efficient at the speed range requested. The individual may then attempt to adjust their riding position to create a more aerodynamically efficient riding shape at the specified speed before having their updated riding shape matched to the database in order to have the best clothing options specified for their updated riding shape.

In all of the above cycle clothing has been used as the example but this would be equally applicable to other sports or activities where clothing aerodynamics are a significant factor such as skiing, speed skating, running, motorcycling, or horse racing for example.

Embodiments of the present invention will now be described by way of example with reference to the accompanying drawings, wherein:
Figure 1 illustrates schematically the flow of air around a cylindrical object;
Figure 2 is a front perspective view of a bodysuit for cycling;
Figure 3 is a schematic side view of a cyclist wearing the bodysuit shown in Figure 2;
Figure 4 is a rear perspective view of the bodysuit shown in Figure 2;
Figures 5.1 and 5.2 illustrate schematically the components of a system and the steps of a process for creating a database containing data relating to the aerodynamic performance of a plurality of garments;
Figure 6 illustrates schematically the components of a system for providing a garment with low aerodynamic drag, and
Figure 7 illustrates the steps of a method of providing a garment with low aerodynamic drag for an individual person.

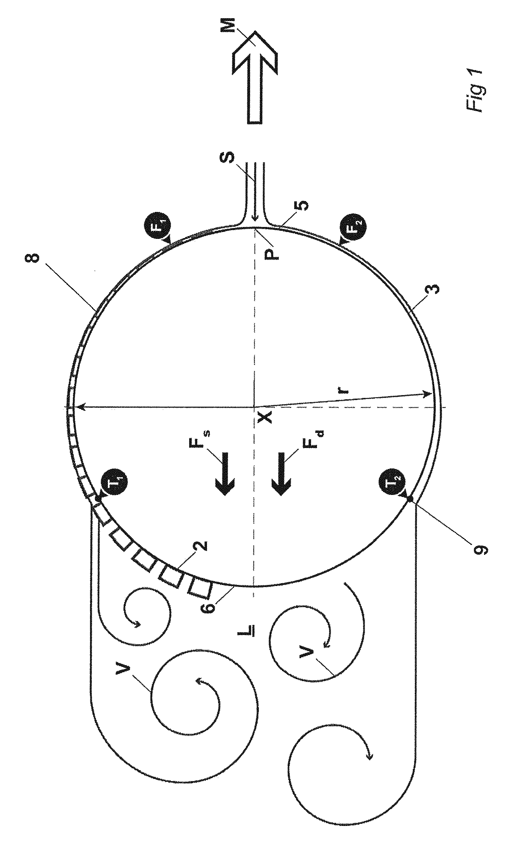

Figure 1 illustrates a typical airflow around a cylindrical body 2, wherein the longitudinal axis X of the cylindrical body is perpendicular to the direction of airflow relative to the cylindrical body. It is recognised that the human body is not a perfect cylinder and in regions such as the chest it is closer to an elliptical shape. However, a cylinder provides a good first approximation to an irregular curved body in which the radius of curvature r of the cylinder is similar to that of the curved body. For example, for an adult, the upper arm typically has an average radius (based on circumference) of about 50mm, the thigh typically has an average radius of about 80mm, and the chest typically has an average radius of about 160mm.

The movement of a body through stationary air may be modelled in a wind tunnel by creating a moving airstream that flows over a stationary body. In Figure 1 the direction of airflow indicated by arrow S is perpendicular to the surface of the cylindrical body at point P, which is called the "*stagnation point*". This is equivalent to forward relative movement of the body 2 through the air in the direction of arrow M.

On either side of the stagnation point P the airflow splits into two streams F1, F2 that pass around opposite sides of the cylindrical body 2. Up to approximately the widest point of the cylindrical body relative to the flow direction, the airflow is substantially laminar, allowing a boundary layer 3 to build up against the surface of the cylindrical body 2.

After passing the widest point of the cylindrical body 2 relative to the direction of flow, the flow streams F1, F2 tend to separate from the surface of the cylindrical body forming vortices V in the region behind the cylindrical body. This creates a low pressure zone L behind the cylindrical body 2 and the resulting pressure difference between the front and the rear faces 5, 6 of the cylindrical body creates a pressure drag force F_{d} that opposes movement of the cylindrical body relative to the air. The movement of air over the surface of the cylindrical body also creates a surface friction force Fₛ, which is usually much smaller than the drag force F_{d} at relative speeds in the range 6-40m/sec.

The points where the boundary layer separates from the surface of the cylindrical body 2 are called the transition points T₁, T₂. The pressure drag force F_{d} experienced by the cylindrical body 2 depends in part on the area of the cylindrical body located within the low pressure zone L between the transition points T₁, T₂. If the transition points T₁, T₂ can be moved rearwards, this will reduce the size of the area affected by the low pressure zone L, thereby reducing the pressure drag F_{d} acting on the cylindrical body 2.

It is known that the transition points T₁, T₂ can be shifted rearwards by providing a suitable texture 8 on the surface of the cylindrical body 2. In the case of a human body, a suitable texture can be provided in the fabric of a garment clothing the body. It should be understood that the texture pattern 8 shown on the upper part of the cylindrical body 2 may also be repeated on the lower side of the body. The transition points T₁, T₂ can also be shifted rearwards by providing trip edges 9 on the surface of the cylindrical body 2. In the case of a human body, trip edges 9 can be provided as seams in a garment clothing the body. The design of a garment, including the provision of a surface texture pattern 8 and/or seams providing trip edges 9 can therefore have a profound effect on the aerodynamic drag experienced by a person participating in a sporting activity.

The garment is preferably an article of sports clothing, which may be used for any sport where the reduction of drag is important. This applies particularly to sports where the input power is limited (for example being supplied by the athlete or the force of gravity) and where the athlete travels at a speed typically in the range 6-20m/sec, for example cycling, running, horse racing and speed skating, or possibly up to 40m/s or more for some sports, for example downhill skiing. The article of clothing may for example consist of a shirt, trousers, leggings, shorts, bibshorts, shoes, overshoes, arm covers, calf guards, gloves, socks or a one-piece bodysuit. The article of clothing may also be an item of headwear, for example a hat or helmet, or a fabric covering for a helmet.

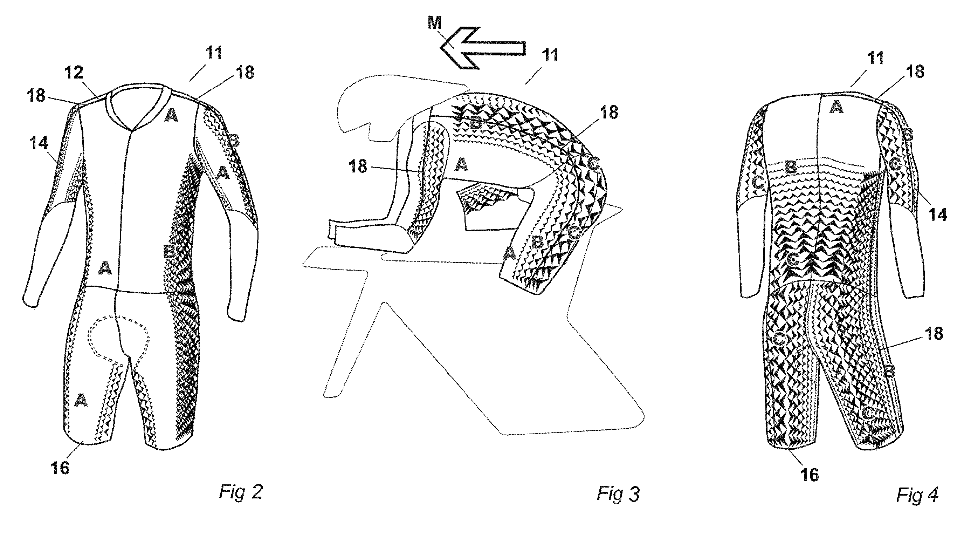

An example of a garment 11 intended for use while cycling is illustrated in Figures 2, 3 and 4. The garment 11 in this case is a one-piece bodysuit comprising a body portion 12 that covers the athlete's torso, with short sleeves 14 and legs 16 that cover the upper portions of the athlete's arms and legs. The garment 11 has a plurality of zones that are defined in relation to the direction of forward travel M of the athlete, and which take account of the athlete's posture. The zones include a first zone A located generally in an inner front region of the garment, a second zone B located in an outer front region of the garment and a third zone C that is located in a rear region of the garment. The outer surface of the garment 11 has a texture that varies across the three zones, the texture typically having a low height in the first zone A, a larger height in the second zone B and a largest height in the third zone C.

In this example, the first zone A is located primarily on the chest and shoulder regions of the torso 12 and on the forward facing portions of the sleeves 14 and the legs 16. The second zone B with an increased texture height is located primarily on the side and back regions of the body 12 and side regions of the sleeves 14 and the legs 16. The third zone C having the greatest texture height is located primarily on the lower back portion of the body 12 and the rear portions of the sleeves 14 and the legs 16. This arrangement of texture patterns has been found to be particularly advantageous for cyclists adopting the classic crouched posture illustrated in Figure 3. It will be appreciated that in other sports where the athletes adopt different postures, the arrangement of the texture patterns will be adapted as required to provide a low level of pressure drag.

In the case of a garment made from a textured fabric, the fabric may in an embodiment have a texture that varies substantially continuously. The term "substantially continuously" is intended to cover both a continuous increase in the texture height and a quasi-continuous increase in texture height, consisting of a plurality of incremental or stepwise increases in the texture height, as may be required according to the manufacturing process used. This can be achieved for example by using a jacquard knitted fabric. Alternatively, the texture pattern can be printed onto the fabric or it can be created by applying a suitable solid material, for example silicone, to the surface of the fabric. The silicone may for example be applied to the surface of the fabric using a 3D printer.

In addition to providing a texture pattern, or as an alternative thereto, the garment 11 may be provided with one or more raised trip edges 18, which are positioned to delay separation of the boundary layer from the surface of the body. These trip edges 18 may for example consist of raised seams that are sewn into the fabric of the garment 11, or they may be created by applying a solid material, for example silicone, to the surface of the fabric. In the example shown in Figures 2-4 trip edges 18 are provided that extend along the side edges of the body portion 12, the sleeves 14 and the legs 16.

The locations of the trip edges and/or the areas of texture pattern can have a significant effect on the aerodynamic efficiency of the garment and the drag experienced by a person wearing the garment. Finding the ideal positions for these features is therefore crucial for optimum aerodynamic performance.

The present invention provides in one embodiment a method of providing a garment with low aerodynamic drag for an individual person. The method comprises providing a database containing data relating to the aerodynamic performance of a plurality of garments when worn by a plurality of persons having different adopted body shapes, determining the adopted body shape of the individual person, entering data relating to the adopted body shape of the individual person into a computer, interrogating the database by means of the computer to identify a set of aerodynamic performance data relating to garments worn by a person having a similar adopted body shape to the individual person, comparing the aerodynamic performance data of the garments in the identified data set, selecting from the identified data set a garment having a relatively low aerodynamic drag, looking up in the database the characteristics of the selected garment, and using at least some of the characteristics of the selected garment to provide a garment for the individual person.

According to another embodiment the invention provides a system for providing a garment with low aerodynamic drag for an individual person. The system comprises a database containing data relating to the aerodynamic performance of a plurality of garments when worn by a plurality of persons having different adopted body shapes, a measuring apparatus for determining the adopted body shape of the individual person, and a computer having data input means for entering data relating to the adopted body shape of the individual person into the computer. The computer is configured to (i) interrogate the database to identify a set of aerodynamic performance data relating to garments worn by a person having a similar adopted body shape to the individual person, (ii) compare the aerodynamic performance data of the garments in the identified data set, (iii) select from the identified data set a garment having a relatively low aerodynamic drag, (iv) look up in the database the characteristics of the selected garment, and (v) use at least some of the characteristics of the selected garment to provide a garment for the individual person.

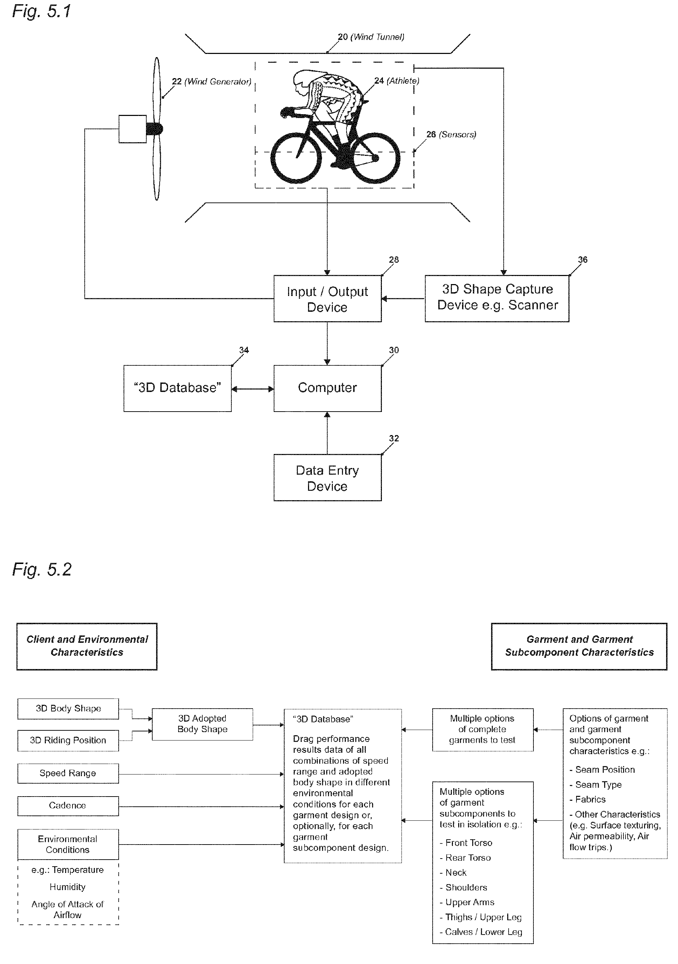

A system and a process for creating a database containing data relating to the aerodynamic performance of a plurality of garments is illustrated in Figures 5.1 and 5.2. The system includes a wind tunnel 20 having a wind generator 22, for example a motor driven fan, for generating a flow of air through the wind tunnel 20. An athlete 24 (in this example a cyclist on a bike) is positioned in the wind tunnel, preferably for example on a rolling road. One or more sensors 26 are provided for sensing the aerodynamic drag experienced by the athlete 24, and optionally the cadence, in the wind tunnel 20. These sensors 26 are connected to an input/output device 28, which transmits data from the sensors to a computer 30. Data may also be entered by an operator via a user interface 32. The data received from the sensors 26 and entered by the operator via the user interface 32 is processed by the computer 30 and stored in a database 34. The system also includes a device 36 capable of capturing 3D body shapes, for example a 3D laser scanner, for scanning the adopted body shape and optionally the standing body shape of the athlete 24. Data representing the adopted body shape and optionally the standing body shape of the athlete 24 is also stored in the database 34.

The system described above is used to create a database containing data relating to the aerodynamic performance of a variety of garments when worn by athletes having different adopted body shapes. The method of creating the database involves scanning the adopted body shape of an athlete, with the athlete in an active posture: i.e. in a posture that is adopted while engaging in a specific sporting activity. For example, for a cyclist this may be the classic crouched posture illustrated in Figure 3. Optionally, the athlete may also be scanned in a number of other postures, for example a standing posture.

The athlete then enters the wind tunnel and a series of tests are performed to measure the aerodynamic drag experienced by the athlete while wearing different garments. In each test the athlete adopts the same posture, preferably an active posture that is adopted while engaging in a specific sporting activity. Preferably, only one feature of the garment is changed for each test so that the effect of that change can be assessed. The feature that is changed may for example relate to the position and/or size of a texture pattern, the position and/or size of trip edges and so on. Where the garment comprises a number of components, for example a body portion, sleeves and legs, these are preferably changed separately so that the aerodynamic drag of each separate component can be measured. The tests may also be performed at different wind speeds to replicate different kinds of sporting event and levels of athleticism. The data resulting from these tests is stored in the database. The tests are then repeated with the same athlete adopting the adjusted body position (in the case of cycling this would be a different riding position to create a different riding shape) and then the entire process is repeated again with different athletes, to build up numerous sets of data relating to the aerodynamic performance of a variety of garments when worn by athletes having different adopted body shapes. Alternatively, mannequins may be used in place of live athletes, to ensure that the results of the tests are not affected by extraneous factors, such as changes in the posture of the athlete during the tests.

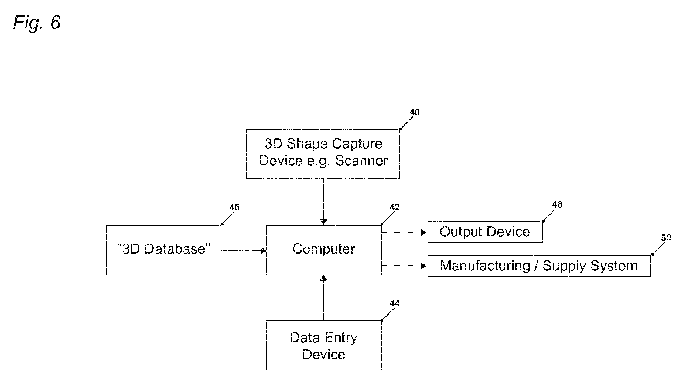

Once the database has been created it can be used to help select and provide a garment with low aerodynamic drag for an individual athlete. A system for providing a garment with low aerodynamic drag is illustrated in Figure 6. The system includes a shape capturing device 40, for example a 3D laser scanner, for capturing the adopted body shape of the athlete. The shape capturing device 40 is connected to a computer 42. Data may also be entered into the computer 42 by an operator via a user interface 44. The computer 42 is also connected to a database 46 that contains the test data obtained by the method described above, relating to the aerodynamic performance of a variety of garments when worn by athletes having different adopted body shapes. The computer 42 may also optionally be connected to an output device 48, for example a printer, VDU or electronic messaging device, and/or to a manufacturing/supply system 50.

The method of providing a garment with low aerodynamic drag for an individual athlete involves scanning the adopted body shape of the athlete, preferably with the athlete in an active posture: i.e. in a posture that is adopted while engaging in a specific sporting activity (in the case of cycling the "riding shape"). For example, for a cyclist this may be the classic crouched posture illustrated in Figure 3. Optionally, the athlete may also be scanned in a number of other postures, for example a standing posture.

The body scan data is then entered into the computer 42, which interrogates the database 46 to identify sets of test data relating to athletes with a similar adopted body shape. Optionally the adopted body shape data representing the athlete may be separated into individual components representing the shapes of different body parts, for example the torso, the arms and the legs etc. The computer interrogates the database and identifies the sets of data (the "subgroup") that relate to athletes with a similar adopted body shape, or to individual body parts that are similar in shape to the corresponding parts of the athlete's body when in the adopted body shape. The computer algorithm then retrieves from the database the 3D database subgroup that most closely matches the athlete or, alternatively, retrieves the individual garment sub-components that demonstrate the lowest drag for the 3D database adopted body component shapes that most closely match those of the athlete's adopted body component shapes. These garment component parts may then be combined to create a complete garment design. This data is then used by the garment manufacturer so that a low drag garment having the required characteristics can be supplied or manufactured.

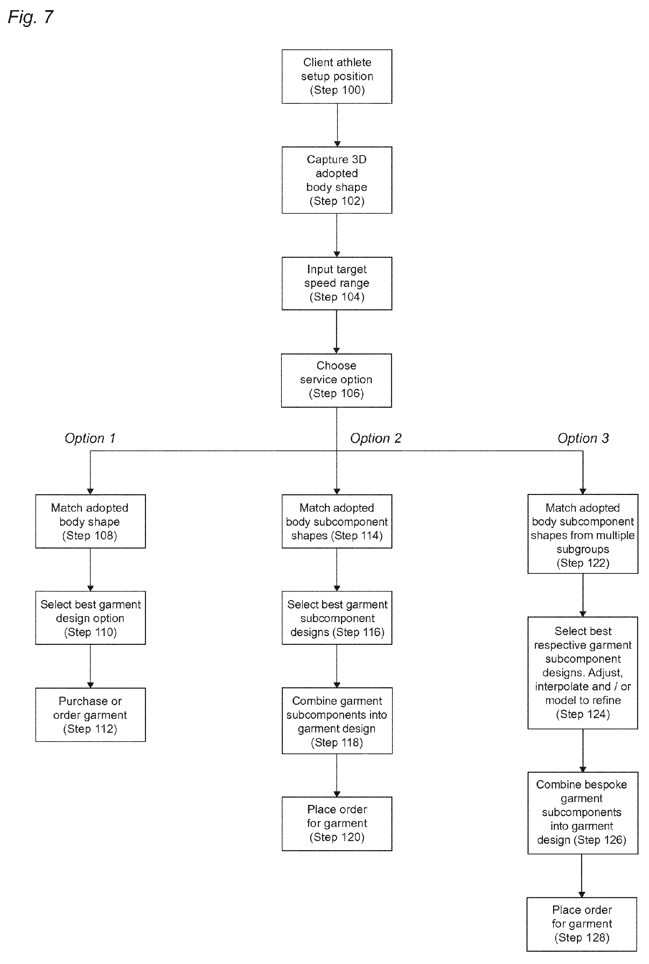

Figure 7 illustrates the steps of a method of providing a garment with low aerodynamic drag for an individual person (or "client"), who in this example is a cyclist.

In the first stage of the process, a stationary bike is set up for the individual client cyclist in his or her preferred riding position (step 100). A suitable shape recording device such as a 3D scanner is then used to record the shape of the client's body in the riding position (step 102): i.e. to capture the individual's adopted body shape (which is the "riding shape" in the case of cycling). The speed range that the client wishes to optimise their clothing for is then entered into the computer (step 104).

The client then chooses which service level they require (step 106). Three likely options are presented here although others may become available in future.

If the client chooses "Option 1", they will be matched with the best aerodynamically efficient option of garment from a selection of pre-existing garment designs that may also be pre-manufactured and available for immediate purchase or ordered for rapid delivery. In this case the computer algorithm compares the client's 3D adopted body shape and target speed range data with the closest matching 3D database subgroup data (step 108). The algorithm next selects from the appropriate available list of pre-designed garments in the 3D database the garment option that was shown to provide the lowest drag at that speed range for the 3D database subgroup that the client was most closely matched with (step 110). The client may then purchase the recommended garment directly or place an order for it if not in stock (step 112).

If the client chooses "Option 2", they are requesting a made-to-order suit that is likely to be aerodynamically optimised to a higher degree than for Option 1 through a process of combining the individual pre-designed garment subcomponents into a complete garment design that is then custom manufactured for the client. In this case the computer algorithm compares each of the client's adopted body component shapes against the 3D database subgroup of adopted body component shapes (step 114). For each adopted body component shape, the algorithm then selects the garment subcomponent design that the 3D database shows to provide the lowest drag for that adopted body component shape at the target speed range (step 116). These individual garment subcomponents designs are then combined to make a complete garment design (step 118). The client may then place an order for this garment to be custom manufactured for them (step 120).

If the client chooses "Option 3", they are opting for a bespoke design process. In this scenario the computer algorithm compares each of the client's adopted body shape component parts against those of the 3D database (step 122). Rather than selecting the singular, best performing, garment subcomponent design for each body shape component part, the algorithm may instead select the best performing garment subcomponent designs from multiple 3D database subgroups each of which are close matches to the client and, for each of their respective best performing garment subcomponents, apply interpolation or other modelling techniques in order to create a more optimised garment subcomponent design for the client (step 124). These garment subcomponents may also be adjusted e.g. for length or girth in order to better fit the client.

These individual garment subcomponents are then combined to make a complete garment (step 126). The client may then place of order for this garment to be custom manufactured for them (step 128).

In the case of any garments that are made to order, the client may also be offered the option to specify other details that do not necessarily relate to aerodynamic performance such as seat pad option or custom printing of the garment.

## Claims

1. A method of providing a garment with low aerodynamic drag for an individual person, the method comprising (a) providing a database containing data relating to (i) a plurality of different adopted body shapes and (ii) one or more garments that provide a low aerodynamic drag with each of the plurality of adopted body shapes, (b) determining an adopted body shape of the individual person, (c) entering data relating to the adopted body shape of the individual person into a computer, (d) interrogating the database by means of the computer and identifying from the plurality of adopted body shapes at least one adopted body shape that is similar to the adopted body shape of the individual person, (e) selecting from the database at least one garment having a low aerodynamic drag with the identified adopted body shape, (f) looking up in the database one or more characteristics of the selected garment, and (g) providing a garment for the individual person that matches one or more characteristics of the selected garment.

2. A method according to claim 1, wherein the database includes data relating to one or more characteristics of the garments selected from: the type of garment, the design, size and/or relative dimensions of the garment, the position of one or more seams in the garment, the type, texture and/or permeability of the fabric forming the garment, or any three dimensional pattern applied to the surface of the fabric.

3. A method according to claim 1 or claim 2, wherein the database contains data relating to the aerodynamic performance of a plurality of garments at a range of different airspeeds, and wherein selecting a garment having a relatively low aerodynamic drag includes selecting an airspeed from the range of different airspeeds.

4. A method according to any one of the preceding claims, wherein the database contains data relating to the aerodynamic performance of a plurality of garments at a range of different performance cadences, and wherein selecting a garment having a relatively low aerodynamic drag includes selecting a performance cadence from the range of different performance cadences.

5. A method according to any one of the preceding claims, wherein the database contains data relating to a plurality of garment components, and wherein the method includes selecting a plurality of garment components, each having a low aerodynamic drag with an identified adopted body shape, and providing a garment for the individual person by combining garment components that match one or more characteristics of the selected garment components.

6. A method according to any one of the preceding claims, wherein determining the adopted body shape of the individual person includes obtaining a three dimensional scan of the adopted body shape of the individual person.

7. A method according to claim 6, wherein the adopted body shape of the individual person is determined while the individual person is in a posture that is adopted while engaging in a specific sporting activity.

8. A method according to any one of the preceding claims, including creating the database that contains data relating to a plurality of different adopted body shapes and one or more garments that provide low aerodynamic drag with each of the plurality of adopted body shapes.

9. A method according to claim 8, wherein creating the database includes performing a series of wind tunnel tests to determine the aerodynamic performance of a plurality of garments when worn by a plurality of persons having different adopted body shapes, and storing data relating to the aerodynamic performance of the garments in a database.

10. A method according to claim 9, wherein performing a series of wind tunnel tests includes changing individual garment components to determine the effect of those garment components on the aerodynamic performance of garment comprising a plurality of garment components.

11. A method according to claim 8, wherein creating the database includes determining the aerodynamic performance of a plurality of garments by computational fluid dynamics.

12. A system for providing a garment with low aerodynamic drag for an individual person, the system comprising a database containing data relating to a plurality of different adopted body shapes and one or more garments that provide a low aerodynamic drag with each of the plurality of adopted body shapes, a measuring apparatus for determining the adopted body shape of the individual person, and a computer having data input means for entering data relating to the adopted body shape of the individual person into the computer, the computer being configured to (i) interrogate the database and identify from the plurality of adopted body shapes at least one adopted body shape that is similar to the adopted body shape of the individual person, (ii) select from the database at least one garment having a low aerodynamic drag with the identified adopted body shape, (iv) look up in the database one or more characteristics of the selected garment, and (v) provide a garment for the individual person by matching one or more characteristics of the selected garment.

13. A system according to claim 12, including a shape capturing device that is configured to obtain a three dimensional scan of the individual person so as to determine the adopted body shape of the individual person.

14. A system according to claim 12 or claim 13, including a wind tunnel and sensing apparatus configured for performing a series of wind tunnel tests to determine the aerodynamic performance of a plurality of garments with each of a plurality of adopted body shapes.
